# EUROPEAN PATENT SPECIFICATION

(11) **EP 3 404 075 B1**
(45) Date of publication and mention of the grant of the patent: **29.04.2020**
(21) Application number: 18166029.1
(22) Date of filing: 06.04.2018
(51) Int. Cl.: C09J 5/00, B60C 1/00, C09J 11/04, C09J 11/06, C09J 11/08, C09J 161/12

(54) **PNEUMATIC TIRE HAVING FILM INNERLINER AND MANUFACTURING METHOD THEREOF**
LUFTREIFEN MIT FOLIENEINLAGE UND HERSTELLUNGSVERFAHREN
PNEUMATIQUE PRÉSENTANT UN FILM DE CALANDRAGE INTÉRIEUR ET SON PROCÉDÉ DE FABRICATION

(30) Priority: 18.05.2017 KR 20170061432
(43) Date of publication of application: 21.11.2018
(73) Proprietor: Kumho Tire Co., Inc., Gwangju 62392 (KR)
(72) Inventor: LEE, II Gew, 17083 Yongsin-si, Gyeonggi-do (KR)
(74) Representative: Schweitzer, Klaus

(56) References cited:
- EP-A1- 2 698 408
- EP-A1- 3 034 577
- US-A1- 2013 199 686

## Description

### [RELATED APPLICATIONS]

This application claims priority to Korean Patent Application No. 10-2017-0061432, filed on May 18, 2017 in the Korean Intellectual Property Office.

### [BACKGROUND OF THE INVENTION]

### 1. Field of the Invention

The present invention relates to a film innerliner coated with a rubber adhesive liquid, a tire including the film innerliner, and a method of manufacturing a pneumatic tire using the film innerliner.

### 2. Description of the Related Art

As a tubeless tire is generally used, in order to prevent air from leaking out of inside the tire during an operation of an automobile, the tubeless tire includes an innerliner disposed on an inner layer of a carcass thereof with high airtightness.

Conventionally, in order to improve the airtightness of the innerliner in the tire, an innerliner made of rubber components such as butyl rubber or halobutyl rubber as a main component has been used. Meanwhile, the butyl rubber is expensive and may express a required function only when it is thickly applied. However, as a thickness of the butyl rubber is increased, the thickness and weight of the finally completed tire are increased, which causes a decrease in a fuel efficiency of the automobile.

In order to solve such a problem, a technique for a film type innerliner which is inexpensive, and is not thick but has an excellent air permeation prevention function has been developed in the art.For example, Korean Patent Laid-Open Publication No. 10-2013-0076868 and Japanese Patent Laid-Open Publication No. 2013-516511 disclose a film for an innerliner of a tire, which includes a polyamide resin and a copolymer containing a polyamide segment and a polyether segment. The film for the innerliner includes an adhesive layer of resorcinol-formaldehyde latex (RFL) applied on at least one surface thereof in a thickness of 0.1 to 20 µm, so that a film innerliner 7 and a carcass ply layer 6 can be adhered to each other. However, since the film innerliner is generally manufactured in a form of a sheet, the film has no adhesion, and thereby a molding operation at both ends with overlap splice joints is impossible. In order to solve such a problem entailed in the joints at both ends of the film, a method, in which a cylindrical film innerliner with no joint is manufactured and inserted into a molding drum to fabricate a tire, has been devised. However, the cylindrical film innerliner has a higher manufacturing cost than the sheet-shaped film innerliner, and requires a RFL processing work that should be applied with heat and tension and is very cumbersome, as well as it is difficult to ensure a uniform quality.

U.S. Patent Application Publication No. US-2012-0222795 (published on September 6, 2012) proposes a method of additionally bonding a rubber layer on an innerliner film and joining both ends of the innerliner film to solve a problem in which the joint portion is expanded during expanding the tire. However, the thickness of the joint strip rubber layer is added to the thickness of the overlapped layer at the joint portion, such that the entire thickness is locally increased from 2 to 4 times.In addition, a difference in physical properties occurs in a cylindrical direction of the tire to adversely affect uniformity, thereby resulting in a deterioration in ride comfort. Particularly, in a case of a product having a low side wall thickness, improvement in such a performance is required because the above-described problems of a deterioration in the ride comfort and an increase in noise are serious.

### [SUMMARY OF THE INVENTION]

In consideration of the above-mentioned circumstances, it is an object of the present invention to provide an innerliner film which may prevent a splice joint formed by overlapping both ends of a sheet-shaped innerliner film from being layer-separated at the time of molding or running of an automobile, and have improved durability and fatigue resistance.

In addition, another object of the present invention is to provide a method of manufacturing a tire capable of securing a uniform and stable inner structure of a tire in all directions by minimizing an increase in a thickness of a splice joint, thereby achieving excellent ride comfort and improved air pressure maintenance performance.

The present inventors have been researching and attempting to develop a pneumatic tire having a rigid joint portion while minimizing a thickness of the splice joint portion during connecting both ends of a sheet-shaped innerliner film, and have consequently confirmed that a pneumatic tire manufactured by using an innerliner film coated with a new rubber adhesive liquid has excellent resistance to air permeability, prevents a deterioration in the ride comfort and an expansion of the joint portion during running of the automobile while having excellent durability, and have completed the present invention based on the confirmation.

That is, in order to achieve the above objects, the present invention provides the following characteristics:
1) A tire innerliner film coated with a rubber adhesive liquid, wherein the rubber adhesive liquid comprises 35 to 45 % by weight of a hydrocarbon solvent having 16 to 22 carbon atoms, 35 to 45 % by weight of a hydrocarbon solvent having 6 to 8 carbon atoms, 5 to 10 % by weight of natural rubber, 1 to 3 % by weight of modified fatty acid, 1 to 3 % by weight of a phenolic resin, 3 to 10 % by weight of sulfur, 1 to 2 % by weight of a resorcinol-formaldehyde resin, and 1 to 4 % by weight of an HMMM resin containing silica.
2) The rubber adhesive liquid may be coated in a thickness of 10 to 100 µm.
3) The innerliner film coated with the rubber adhesive liquid may be obtained by coating one surface or both surfaces of a conventional film made of a thermoplastic elastomer composition including a polyamide resin or a mixture of a polyamide resin with an elastomer with resorcinol-formaldehyde latex for providing a coupling force with rubber, and coating the rubber adhesive liquid thereon to provide an adhesive force between the film and the film or between the film and the rubber adjacent thereto.
4) A pneumatic tire manufactured by using the innerliner film coated with the above rubber adhesive liquid.
5) A method of manufacturing a pneumatic tire including: winding a tire building drum with an innerliner film coated with the above rubber adhesive liquid; and overlapping both ends of the innerliner film with each other to form a splice joint, wherein the rubber adhesive liquid is coated in a thickness of 10 to 100 µm, and the splice joint has a length of 20 to 100 mm.
6) The step of forming the splice joint may include only a process of overlapping both ends of the innerliner film coated with the rubber adhesive liquid without a thermal fusion bonding process.

A tire including the innerliner film of the present invention may attain excellent airtightness even with a thin thickness to reduce a weight of the tire, and may reduce a difference in the thickness between the joint portion and the other portions, thereby achieving a uniform and stable structure in all directions. Accordingly, it is possible to improve ride comfort of an automobile, and in spite of the thin thickness, excellent durability and improved resistance to air permeability may be achieved during the molding process and running of the automobile.

In addition, according to the method of manufacturing a pneumatic tire of the present invention, since green case molding is performed by simply winding the innerliner film coated with a rubber adhesive liquid on the tire building drum without a thermal fusion bonding process, workability may be greatly improved.

### [BRIEF DESCRIPTION OF THE DRAWINGS]

The above and other objects, features and other advantages of the present invention will be more clearly understood from the following detailed description taken in conjunction with the accompanying drawings, in which:

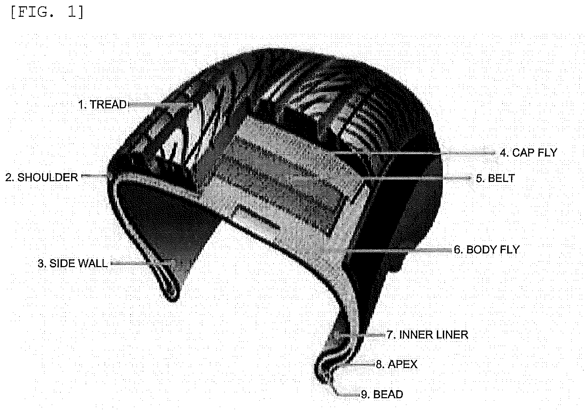

FIG. 1 is a diagram illustrating a structure of a pneumatic tire using a film innerliner;

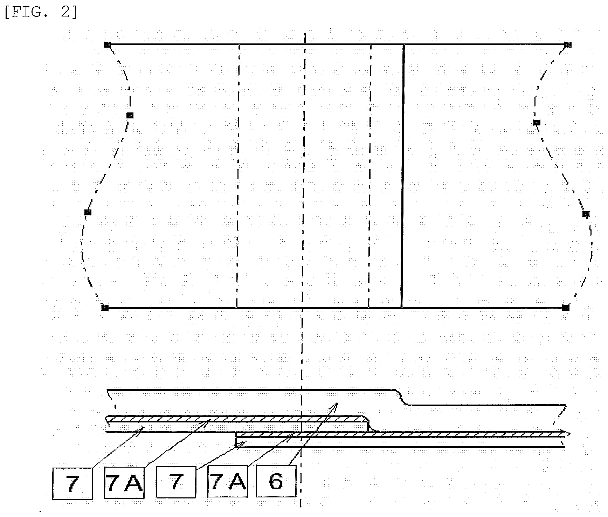

FIG. 2 is plan and cross-sectional views illustrating one surface of a splice joint formed by laminating both ends of an innerliner film of the present invention (6: carcass ply, 7: innerliner film, 7A: rubber adhesive liquid);

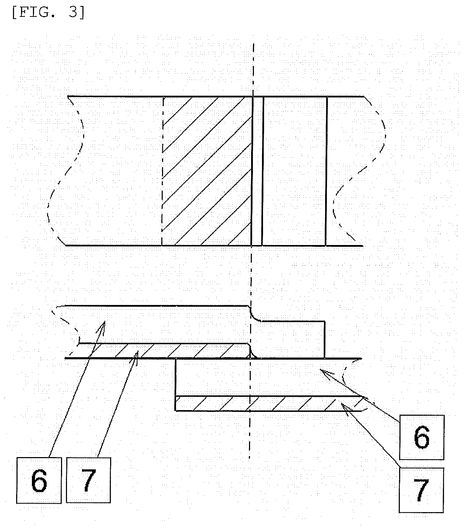

FIG. 3 is plan and cross-sectional views illustrating a manufacturing process of a pneumatic tire by a conventional method in which a film innerliner is attached to one surface of a carcass ply before being wound on a tire building drum, and carcass ply layers are joined to each other without a film innerliner at a portion in which the carcass plies are joined with a splice joint; and

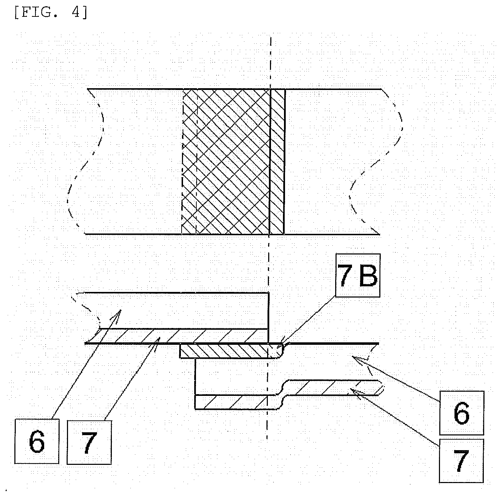

FIG. 4 is plan and cross-sectional views illustrating one surface of a joint portion in which rubber layers are laminated on both ends of the innerliner film of Comparative Example 2 (6: carcass ply, 7: innerliner film, 7B: strip rubber layer), wherein a rubber composition of the strip rubber layer 7B is commonly the same as or similar to that of the carcass ply rubber, and has a thickness of 1 to 2 mm and a width of 10 to 50 mm.

### [DETAILED DESCRIPTION OF THE INVENTION]

Hereinafter, an innerliner film and a method of manufacturing a pneumatic tire including the innerliner film will be described in more detail with reference to the drawings.

According to one embodiment of the present invention, in the innerliner film coated with a rubber adhesive liquid of the present invention,the rubber adhesive liquid may include 35 to 45 % by weight of a hydrocarbon solvent having 16 to 22 carbon atoms, 35 to 45 % by weight of a hydrocarbon solvent having 6 to 8 carbon atoms, 5 to 10 % by weight of natural rubber, 1 to 3 % by weight of modified fatty acid, 1 to 3 % by weight of a phenolic resin, 3 to 10 % by weight of sulfur, 1 to 2 % by weight of a resorcinol-formaldehyde resin, and 1 to 4 % by weight of an HMMM resin containing silica.

The hydrocarbon solvent having carbon atoms of 16 to 22 may use at least one selected from a group consisting of hexadecane, heptadecane, octadecane, and the like as an aliphatic hydrocarbon solvent.

The hydrocarbon solvent having 6 to 8 carbon atoms includes at least one selected from a group consisting of aliphatic hydrocarbons such as cyclohexane, cyclohexanone, n-hexane, dimethyl carbonate, hexane, and heptane as an aliphatic hydrocarbon solvent.

The natural rubber used in the rubber adhesive liquid of the present invention may be a latex itself, or may be used by mixing a natural rubber with styrene-butadiene, butadiene, or butyl rubber.

As an adhesive resin used in the rubber adhesive liquid of the present invention, a phenolic resin and a resorcinol-formaldehyde resin are used. A content of the phenolic resin of the present invention preferably ranges from 1 to 3 % by weight to a total weight of the rubber adhesive liquid. The phenolic resin may be included in an amount of 1 % by weight or more in terms of a chemical reaction for obtaining excellent adhesiveness, and may be included in an amount of 3 % by weight or less in terms of a threshold value in which an effect of further improving the adhesive force is not expected even when increasing the content of the phenolic resin. In addition, the resorcinol-formaldehyde resin of the present invention may be included in amount of 1 % by weight or more to the total weight of the rubber adhesive liquid in terms of the chemical reaction for excellent adhesiveness. Even if the content thereof exceeds 2 % by weight, it is difficult to expect a further improvement in the adhesiveness.

The melamine resin of the present invention is used as a cross-linking agent for cross-linking the natural rubber and an adhesive resin. By adding this resin, high heat-resistant adhesiveness, rubber coverage, excellent heat resistant characteristics, and fatigue resistance may be attained. At this time, an amount of the melamine resin preferably ranges from 1 to 4 % by weight to the total weight of the rubber adhesive liquid. If the content thereof is less than 1 % by weight, durability may be deteriorated under high temperature and high humidity conditions. If the content thereof exceeds 4 % by weight, fluidity of the rubber adhesive liquid may be decreased. As the melamine resin of the present invention, KUMAD HM-N, which is a composition prepared by mixing a Hexa-Methoxy-Methyl-Melamine resin with silica (Hi-sil ™ 233) in a weight ratio of 65:25, and is manufactured by Kumho Petrochemical Co., Ltd., is used.

The innerliner film coated with the rubber adhesive liquid of the present invention may be a film obtained by coating one surface or both surfaces of a conventional film formed in a sheet shape with a thermoplastic elastomer composition including a polyamide resin or a mixture of a polyamide resin and an elastomer as a rubber adhesive liquid. The conventional film may have a thickness of 30 to 300 µm and an air permeability of 200 cc/ (m²× 24 hr×atm) or less, and may include an adhesive layer of resorcinol-formaldehyde latex (RFL) formed on at least one surface thereof in a thickness of 0.1 to 20 µm. The conventional film used in examples of the present invention includes copolymers of polyamide segments and polyether segments, and elastomers. However, any film may be used without limitation thereof so long as it is a film innerliner having excellent air permeability. In examples of the present invention, Omega ™ film manufactured by Kolon Corporation is preferably used.

The conventional film may further include an adhesive layer of resorcinol-formaldehyde latex (RFL) on one surface or both surfaces thereof. That is, a conventional film made of a thermoplastic elastomer composition including a polyamide resin or the like in a sheet shape may further include an adhesive layer of resorcinol-formaldehyde latex (RFL) (also briefly referred to as a RFL adhesive layer) on at least one surface thereof, and the rubber adhesive liquid of the present invention may be coated on the RFL adhesive layer.

A conventional film innerliner 7 as described above is preheated on a drum having a temperature of 100 to 170°C within 10 seconds, and is applied with a rubber adhesive liquid 7A in a thickness of 10 to 100 µm to provide an adhesive force. If the thickness of the rubber adhesive liquid is less than 10 µm, the adhesive force and adhesiveness with the adjacent rubber layer are reduced. If the thickness thereof exceeds 100 µm, the thickness of the joint portion is increased to cause a deterioration in an effect of improving uniformity.

The preheating is a process for exciting the surface of the conventional film innerliner 7 to help adhesion with the rubber adhesive liquid 7A. The temperature and time of preheating may vary depending on a working time and a reaction rate of the rubber adhesive liquid 7A.The rubber adhesive liquid 7A may be applied by various methods such as spraying, brushing, and dipping, and may be appropriately selected and used depending on an environment of the manufacturing process such as whether a hood is installed, productivity and the like. The rubber adhesive liquid 7A is heat dried at a temperature of 50 ± 20°C. Since there is a difference in the adhesive force required in the film innerliner 7 according to the drying time, the temperature of the preheating may be controlled according to a level of the adhesive force that satisfies conditions of a molding operation.

According to another embodiment of the present invention, there is provided a pneumatic tire manufactured by using the innerliner film coated with a rubber adhesive liquid.

The tire including the innerliner film of the present invention may attain excellent airtightness even with a thin thickness to reduce a weight of the tire, and may reduce a difference in the thickness between the joint portion and the other portions, thereby achieving a uniform and stable structure in all directions. Accordingly, it is possible to improve ride comfort of an automobile, and in spite of the thin thickness, excellent durability and improved resistance to air permeability may be achieved during the molding process and running of the automobile.

According to another embodiment of the present invention, there is provided a method of manufacturing a pneumatic tire including the steps of: winding a tire building drum with an innerliner film coated with the rubber adhesive liquid; and then overlapping both ends of the innerliner film to form a splice joint.

The innerliner film coated with the rubber adhesive liquid 7A on at least one surface thereof is wound on the tire building drum, and both ends thereof are overlapped with each other in a length of 20 to 100 mm to form a splice joint. If the length of the overlapped joint is less than 20 mm, a problem in which the joint portion is opened may occur. If the length thereof exceeds 100 mm, the effects of improving the uniformity, durability and air permeability are insignificant. Therefore, it is preferable to form the splice joint within the above-described range.

In the method of manufacturing a pneumatic tire according to the present invention,the step of forming the splice joint is performed only by a process of overlapping both ends of the innerliner film coated with the rubber adhesive liquid without a thermal fusion bonding process to form the green case, such that workability may be improved.

Hereinafter, the present invention will be described in more detail with reference to examples. However, the following examples are illustrative of the present invention, and the contents of the present invention are not limited by the following examples.

### <Example 1: Manufacturing of innerliner film coated with rubber adhesive liquid>

### Example 1-1.

### (1) Preparation of film innerliner

In the examples of the present invention, an Omega ™ film manufactured by Kolon Corporation was used. The film innerliner 7 is made of a copolymer of a polyamide segment and a polyether segment, and an elastomer, has a thickness of 30 to 300 µm and an air permeability of 200 cc/(m²× 24 hr×atm) or less, and includes an adhesive layer of resorcinol-formaldehyde latex (RFL) formed on one surface thereof in a thickness of 0.1 to 20 µm.

### (2) Preparation of rubber adhesive liquid

40 % by weight of a hydrocarbon solvent having 16 to 22 carbon atoms, 40 % by weight of a hydrocarbon solvent having 6 to 8 carbon atoms, 7 % by weight of natural rubber, 2 % by weight of modified fatty acid, 3 % by weight of a terpene phenolic resin, 5 % by weight of sulfur, 1 % by weight of a resorcinol-formaldehyde resin, and 2 % by weight of an HMMM resin mixed with silica were admixed to prepare a mixture solution. The mixture solution was stirred at a temperature of 50°C at a speed of 20 to 30 rpm for 1 hour to prepare a rubber adhesive liquid for adhering the film innerliner.

### (3) Application of rubber adhesive liquid

The prepared innerliner film was passed through a drum having a diameter of 300 mm at a temperature of 100 to 170°C at a speed of 5 mpm to excite the surface of the film. Then, the prepared rubber adhesive liquid was applied to the film by a dipping method in a film thickness of 50 µm, and the rubber adhesive liquid was evenly adhered to the surface of the film, followed by heat drying at a heat dry temperature of 50°C for 3 minutes to prepare an innerliner film coated with the rubber adhesive liquid on both surfaces or one surface thereof.

### Examples 1-2.

An innerliner film was prepared according to the same procedures as described in Example 1-1, except that a rubber adhesive liquid containing 10 % by weight of natural rubber was used, without using a terpene phenolic resin.

### Example 1-3.

An innerliner film was prepared according to the same procedures as described in Example 1-1, except that a rubber adhesive liquid containing 2 % by weight of a phenolic resin, 1.5 % by weight of a resorcinol-formaldehyde resin, 3 % by weight of an HMMM resin containing silica, and 6.5 % by weight of natural rubber was used.

### Example 1-4.

An innerliner film was prepared according to the same procedures as described in Example 1-1, except that a rubber adhesive liquid containing 30 % by weight of a hydrocarbon solvent A, 30 % by weight of a hydrocarbon solvent B, and 30 % by weight of natural rubber was used, without using a terpene phenolic resin.

### Examples 1-5.

An innerliner film was prepared according to the same procedures as described in Example 1-1, except that a rubber adhesive liquid containing 10 % by weight of a terpene phenolic resin, 36 % by weight of a hydrocarbon solvent A, 36 % by weight of a hydrocarbon solvent B, and 8 % by weight of natural rubber was used.

### Example 1-6.

An innerliner film was prepared according to the same procedures as described in Example 1-1, except that a rubber adhesive liquid containing 10 % by weight of natural rubber was used, without including a resorcinol-formaldehyde resin and an HMMM resin.

### Example 1-7.

An innerliner film was prepared according to the same procedures as described in Example 1-1, except that a rubber adhesive liquid containing 50 % by weight of the hydrocarbon solvent A, and 5 % by weight of natural rubber was used, without including sulfur, a resorcinol-formaldehyde resin, and an HMMM resin.

### <Experimental Example: Evaluation of adhesion of rubber adhesive liquid>

### Experimental Example 1: Evaluation of interlayer cohesion

The rubber adhesive liquids prepared in the compositions of Examples 1 to 7 were applied to a film innerliner, and dried for 20 seconds, and then another film innerliner or rubber sheet to be attached was overlapped on the above-described film innerliner, followed by compressing the same with a force of 4.9 N to fabricate a specimen. The specimen was cut into a size of 25.4 mm × 152 mm, and then the sheet was pulled to measure a force at the time of T peeling-off, which was evaluated as an interlayer adhesive force. At this time, a peel-off rate of the sheet was set to be 100 mm/min.

### Experimental Example 2: Evaluation of interlayer adhesion

A specimen was fabricated according to the same procedures as described in Experimental Example 1, and then the specimen with two sheets compressed thereon was applied with a pressure of 50 N and a heat of 160°C for 20 minutes using a press vulcanizer. Using the specimen applied with both the heat and pressure, both ends of the sheet were pulled to measure a force at the time of T peeling-off, which was evaluated as an interlayer adhesiveness. At this time, a peel-off rate of the sheet was set to be 100 mm/min.

**[Table 1]**

| Rubber Adhesive Composition | Example 1-1 | Example 1-2 | Example 1 to 3 | Example 1 to 4 | Example 1-5 | Example 1-6 | Example 1-7 |
|---|---|---|---|---|---|---|---|
| Hydrocarbon solvent A¹⁾ | 40 | 40 | 40 | 30 | 36 | 40 | 50 |
| Hydrocarbon solvent B²⁾ | 40 | 40 | 40 | 30 | 36 | 40 | 40 |
| Natural rubber³⁾ | 7 | 10 | 6.5 | 30 | 8 | 10 | 5 |
| Modified fatty acid | 2 | 2 | 2 | 2 | 2 | 2 | 2 |
| Phenolic resin⁴⁾ | 3 | - | 2 | - | 10 | 3 | 3 |
| Sulfur | 5 | 5 | 5 | 5 | 5 | 5 | - |
| Resorcinol-formaldehyde resin⁵⁾ | 1 | 1 | 1.5 | 1 | 1 | - | - |
| HMMM resin⁶⁾ | 2 | 2 | 3 | 2 | 2 | - | - |
| Interlayer cohesion | | | | | | | |
| - Film/Film | 5.2 | 3.8 | 3.1 | 1.3 | 3.9 | 2.5 | 1.5 |
| - Film/Rubber | 5.6 | 3.5 | 3.4 | 1.8 | 2.6 | 2.8 | 1.7 |
| Interlayer adhesion | | | | | | | |
| - Film/Film | 11.0 | 9.8 | 10.8 | 3.3 | 2.7 | 2.4 | 1.8 |
| - Film/Rubber | 12.9 | 11.2 | 11.5 | 4.2 | 2.5 | 3.1 | 2.2 |

| | | | | | | | |
|---|---|---|---|---|---|---|---|
| 1) As a hydrocarbon solvent A of a hydrocarbon solvent having 16 to 22 carbon atoms, hexadecane was used. 2) As a hydrocarbon solvent B of a hydrocarbon solvent having 6 to 8 carbon atoms, cyclohexane was used. 3) As natural rubber, Malaysia-made latex was used. 4) As a phenolic resin of a terpene phenolic resin, YS POLYSTER T160 manufactured by NihamaCorporationwas used. 5) As a resocinol-formaldehyde resin, KA-18 manufactured by Kolon Corporation was used. 6) As an HMMM of a composition prepared by mixing a Hexa-Methoxy-Methyl-Melamine resin with silica (Hi-sil ™ 233) in a weight ratio of 65:25, KUMAD HM-N manufactured by Kumho Petrochemical Co., Ltd. was used. | | | | | | | |

### <Example 2: Manufacturing of pneumatic tire>

### Example 2-1

### (1) Formation of splice joint

An innerliner film 7 coated with the rubber adhesive liquid 7A of Example 1-1 having the most excellent adhesive force and adhesiveness was wound on a tire building band drum to form a splice joint so that both ends of the innerliner film are overlapped with each other by 10 mm.

### (2) Manufacture of pneumatic tire

A rubber 6 for forming a carcass ply layer, bead members 8 and 9, a belt portion 5, a cap ply portion 4, and a tread rubber layer 1 were sequentially laminated on the innerliner film 7 on which the splice joint is formed by winding the same on the tire building drum to manufacture a pneumatic tire. The manufactured tire has a standard of 205/55 R16.

### Example 2-2

A pneumatic tire was manufactured according to the same procedures as described in Example 2-1, except that a splice joint was formed so that both ends of the innerliner film were overlapped with each other by 30 mm.

### Example 2-3

A pneumatic tire was manufactured according to the same procedures as described in Example 2-1, except that a splice joint was formed so that both ends of the innerliner film were overlapped with each other by 100 mm.

### Example 2-4

A pneumatic tire was manufactured according to the same procedures as described in Example 2-1, except that a splice joint was formed so that both ends of the innerliner film were overlapped with each other by 110 mm.

### Comparative Example 1

A pneumatic tire was manufactured by a conventional method using a film innerliner containing butyl rubber.

### Comparative Example 2

A film innerliner was previously attached to one surface of a carcass ply layer, and the prepared film inner liner was wound on a tire building drum to prepare a cylindrical film innerliner. At this time, since a length of the film innerliner is shorter than that of the carcass ply, one end in which the carcass ply is joined is not covered with the film innerliner, such that the joint is formed only by the carcass ply layer.

### <Test Example: Performance evaluation of pneumatic tire>

### Test Example 3: Durability of splice joint

**The pneumatic tire**s manufactured in Example 2 and Comparative Example 1-2 were run for 80 hours at a speed of 81 km/h under conditions of an air pressure of 120 kPa and a load of 7.24 kN by using a running tester, and then an occurrence of layer separation at the splice joint portion or cracks was visually confirmed to evaluate the durability of the splice joint in three stages (unsuitable, good, and excellent).

The tires that had been run were visually inspected and products with the occurred cracks or layer separation at the splice joint portion were determined as "unsuitable," and products with no occurred crack or layer separation were determined as "good" or "excellent." Specifically, the products determined as "good" or "excellent" were further classified into "good" and "excellent," respectively, depending on whether a small deformation was formed on a surface of the film innerliner joint portion, while there was no problem in the use of the products.

### Test Example 4: Resistance to air permeability

The pneumatic tires manufactured in Example 2 and Comparative Example 1-2 were put in a rim, air pressure of 230 kPa was injected into the tires, and the tires were stored for 3 months, and then a leakage ratio of the air pressure was calculated. A value measured with the tire of Comparative Example 1 was expressed as 100, and the leakage ratios of the air pressure between the tire of the other examples and the tire of Comparative Example 1 were compared and calculated to express as an index. The larger the value, the better the resistance to air permeability.

### Test Example 5: Uniformity

A radial force displacement (RFV) was measured according to JASO (Japanese Automotive Standards Organization) C-607-87. A value measured with the tire of Comparative Example 1 was expressed as 100, and the displacements of the radial direction forces between the other Examples and Comparative Example 1 were compared and calculated to express as an index. The larger the value, the greater the degree of balance, which means that there is less occurrence of tremors and deviations in the automobile.

**[Table 2]**

| Classification | Example 2 -1 | Example 2-2 | Example 2-3 | Example 2-4 | Comparative Example 1 | Comparative Example 2 |
|---|---|---|---|---|---|---|
| Innerliner | Film | Film | Film | Film | Butyl rubber | Carcass ply/Film |
| Rubber | - | - | - | - | - | 30mm |
| padding | | | | | | |
| Overlap length (mm) | 10 | 30 | 100 | 110 | 10 | 10 |
| Layer separation of Splice Joints | Unsuit able | Good | Excellen t | Excelle nt | Good | Good |
| Air permeability | 103 | 112 | 115 | 116 | 100 | 111 |
| Uniformity | 120 | 120 | 110 | 110 | 100 | 90 |

The innerliner film prepared by applying with the rubber adhesive liquid of Example 1 is applied to the pneumatic tire, and a test was performed. As a result of the test, it could be confirmed that the pneumatic tire had a significantly higher resistance to air permeability than the tire using the butyl rubber innerliner of Comparative Example 1 (having butyl in a content 80% with a thickness of 1.40 mm).

Further, in a case of applying the innerliner film manufactured by applying with the rubber adhesive liquid of the present invention to a tire, since the adhesion was performed only by the process of overlapping the films, a difference in the thickness between the splice joint portion and the other portions may be minimized, and thereby it could be confirmed that the tire had excellent uniformity. On the other hand, in a case of applying the innerliner film of Comparative Example 2 to a tire, it could be confirmed that a thickness of the overlapped portion at the splice joint portion was added to the thickness of the joint strip rubber layer, thereby adversely affecting uniformity.

Meanwhile, when excessively decreasing an overlapped length of the splice joint portion to 20 mm or less as in Example 2-1, the splice joint was unstable during green case expansion, or layer separation occurred after running. When increasing the overlapped length of the splice joint as in Examples 2-2, 2-3 and 2-4, the layer separation after running was determined as good or excellent. However, even when overlapping exceeds 100 mm, it could be confirmed that an effect of improving the performance was similar to the case of overlapping by 100 mm.

## Claims

1. A tire innerliner film coated with a rubber adhesive liquid,
wherein the rubber adhesive liquid comprises 35 to 45 % by weight of a hydrocarbon solvent having 16 to 22 carbon atoms, 35 to 45 % by weight of a hydrocarbon solvent having 6 to 8 carbon atoms, 5 to 10 % by weight of natural rubber, 1 to 3 % by weight of modified fatty acid, 1 to 3 % by weight of a phenolic resin, 3 to 10 % by weight of sulfur, 1 to 2 % by weight of a resorcinol-formaldehyde resin, and 1 to 4 % by weight of an HMMM resin containing silica.

2. The tire innerliner film according to claim 1, wherein the rubber adhesive liquid is coated in a thickness of 10 to 100 µm.

3. The tire innerliner film according to claim 1, wherein the innerliner film coated with the rubber adhesive liquid is obtained by coating one surface or both surfaces of a conventional film made of a thermoplastic elastomer composition including a polyamide resin or a mixture of a polyamide resin with an elastomer with resorcinol-formaldehyde latex for providing a coupling force with rubber, and coating the rubber adhesive liquid thereon to provide an adhesionbetween the film and the film or between the film and the rubber adjacent thereto.

4. A pneumatic tire manufactured by using the innerliner film coated with the rubber adhesive liquid according to claim 1.

5. A method of manufacturing a pneumatic tire comprising:
winding a tire building drum with an innerliner film coated with the rubber adhesive liquid according to claim 1; and
overlapping both ends of the innerliner film with each other to form a splice joint,
wherein the rubber adhesive liquid is coated in a thickness of 10 to 100 µm, and the splice joint has a length of 20 to 100 mm.

6. The method of manufacturing a pneumatic tire according to claim 5, wherein the step of forming the splice joint comprises only a process of overlapping both ends of the innerliner film coated with the rubber adhesive liquid without a thermal fusion bonding process.

## Patentansprüche

1. Reifen-Innerlinerfilm, der mit einer Kautschukkleberflüssigkeit beschichtet ist,
wobei die Kautschukkleberflüssigkeit 35 bis 45 Gew.-% an einem Kohlenwasserstoff-Lösungsmittel mit 16 bis 22 Kohlenstoffatomen, 35 bis 45 Gew.-% Kohlenwasserstoff-Lösungsmittel mit 6 bis 8 Kohlenstoffatomen, 5 bis 10 Gew.-% Naturkautschuk, 1 bi 3 Gew.-% an modifizierter Fettsäure, 1 bis 3 Gew.-% an einem Phenolharz, 3 bis 10 Gew.-% Schwefel, 1 bis 2 Gew.-% an einem Resorcinol-Formaldehyd-Harz und 1 bis 4 Gew.-% an einem HMMM-Harz-enthaltenden Siliciumdioxid umfasst.

2. Reifen-Innerlinerfilm gemäß Anspruch 1, wobei die Kautschukkleberflüssigkeit in einer Dicke von 10 bis 100 µm aufgeschichtet ist.

3. Reifen-Innerlinerfilm gemäß Anspruch 1, wobei der mit der Kautschukkleberflüssigkeit beschichtete Innerlinerfilm durch Beschichten einer Oberfläche oder beider Oberflächen eines herkömmlichen Films aus einer thermoplastischen Elastomerzusammensetzung, die ein Polyamidharz oder ein Gemisch eines Polyamidharzes mit einem Elastomer enthält, mit Resorcinol-Formaldehyd-Latex zum Bereitstellen einer Kopplungskraft mit Kautschuk und Schichten der Kautschukkleberflüssigkeit darauf zum Bereitstellen von Haftvermögen zwischen dem Film und der Film oder zwischen dem Film und dem dazu benachbarten Kautschuk hergestellt ist.

4. Luftreifen, hergestellt unter Verwendung des mit der Kautschukkleberflüssigkeit beschichteten Inner liner films gemäß Anspruch 1.

5. Verfahren zur Herstellung eines Luftreifens, umfassend:
Umwickeln einer Reifenherstellungstrommel mit einem mit der Kautschukkleberflüssigkeit beschichteten Innerlinerfilm gemäß Anspruch 1; und
Überlappen beider Enden des Innerlinerfilms miteinander, um eine Spleißverbindung zu bilden,
wobei die Kautschukkleberflüssigkeit in einer Dicke von 10 bis 100 µm aufgeschichtet ist und die Spleißverbindung eine Länge von 20 bis 100 mm aufweist.

6. Verfahren zur Herstellung eines Luftreifens gemäß Anspruch 5, wobei der Schritt des Bildens der Spleißverbindung nur ein Verfahren des Überlappens beider Enden des mit der Kautschukkleberflüssigkeit beschichteten Innerlinerfilms, ohne ein Warmschmelzverbindungsverfahren umfasst.

## Revendications

1. Film de calandrage intérieur de pneu revêtu d'un liquide adhésif à base de caoutchouc,
dans lequel le liquide adhésif à base de caoutchouc comprend 35 à 45 % en poids d'un solvant à base d'hydrocarbures présentant 16 à 22 atomes de carbone, 35 à 45 % en poids d'un solvant à base d'hydrocarbures présentant 6 à 8 atomes de carbone, 5 à 10 % en poids de caoutchouc naturel, 1 à 3 % en poids d'acide gras modifié, 1 à 3 % en poids d'une résine phénolique, 3 à 10 % en poids de soufre, 1 à 2 % en poids de résine de résorcinol-formaldéhyde et 1 à 4 % en poids d'une résine HMMM contenant de la silice.

2. Film de calandrage intérieur de pneu selon la revendication 1, dans lequel le liquide adhésif à base de caoutchouc est revêtu sur une épaisseur de 10 à 100µm.

3. Film de calandrage intérieur de pneu selon la revendication 1, dans lequel le film de calandrage intérieur revêtu du liquide adhésif à base de caoutchouc est obtenu en revêtant une surface ou les deux surfaces d'un film conventionnel réalisé avec une composition d'élastomère thermoplastique incluant une résine polyamide ou un mélange d'une résine polyamide avec un élastomère avec un latex de résorcinol-formaldéhyde pour fournir une force de couplage avec le caoutchouc, et en revêtant le liquide adhésif à base de caoutchouc sur celui-ci pour fournir une adhérence entre le film et le film ou entre le film et le caoutchouc adjacent à celui-ci.

4. Pneu fabriqué à l'aide du film de calandrage intérieur revêtu du liquide adhésif à base de caoutchouc selon la revendication 1.

5. Production de fabrication d'un pneu comprenant :
l'enroulement d'un tambour de confection de pneu avec un film de calandrage intérieur revêtu du liquide adhésif à base de caoutchouc selon la revendication 1 ; et
la superposition des deux extrémités du film de calandrage intérieur l'une avec l'autre pour former une commissure,
dans lequel le liquide adhésif à base de caoutchouc est revêtu sur une épaisseur de 10 à 100 µm et la commissure présente une longueur de 20 à 100 mm.

6. Procédé de fabrication d'un pneu selon la revendication 5, dans lequel l'étape de formation de la commissure ne comprend qu'un processus de superposition des deux extrémités du film de calandrage intérieur revêtu du liquide adhésif à base de caoutchouc sans un processus de liaison par fusion thermique.
